# EUROPÄISCHE PATENTANMELDUNG

(11) **EP 1 223 695 A2**
(43) Veröffentlichungstag der Anmeldung: **17.07.2002**
(21) Anmeldenummer: 02000659.9
(22) Anmeldetag: 11.01.2002
(51) Int. Cl.: H04B 10/207

(54) **Transponder zur Überwachung von Netzelementen in Hybrid Fiber Coax-Netzen**

(30) Priorität: 13.01.2001 DE 10101331
(71) Anmelder: Philips Corporate Intellectual Property GmbH, 52066 Aachen (DE); Koninklijke Philips Electronics N.V., 5621 BA Eindhoven (NL)
(72) Erfinder: Baldus, Heribert, Dr., 52066 Aachen (DE); Budde, Wolfgang Otto, Dr., 52066 Aachen (DE); Klabunde, Karin, 52066 Aachen (DE); Mülhens, Oliver, 52066 Aachen (DE)
(74) Vertreter: Volmer, Georg, Dipl.-Ing.

(57) **Zusammenfassung**

Die Erfindung bezieht sich auf einen Transponder zur Überwachung von Netzelementen eines Hybrid Fiber Coax-Netzes mit einer Firmware,
- die aus mehreren übereinander liegenden Schichten (2, 12, 22) besteht, die mehrere als Funktionsmodule ( 3 bis 11, 13 bis 19) bezeichnete Softwarekomponenten enthalten,
- wobei eine untere Schicht (2) die Funktionsmodule (3 bis 11) beinhaltet, welche die Funktionalität der Hardwarekomponenten des Transponders beschreiben,
- und die Funktionsmodule (13 bis 19), der über der unteren Schicht (2) liegenden Schicht (12), gemeinsam eine Anwendungsschnittstelle bilden, welche die Anwendungssoftware der verschiedensten von Hersteller abhängigen zentralen Überwachungssysteme verarbeiten kann, und somit der gleiche Transponder in unterschiedlichen Überwachungssystemen mit unterschiedlichen Protokollen und Verwaltungsanwendungen verwendet werden kann.

## Beschreibung

Die Erfindung bezieht sich auf einen Transponder mit einer Schichten-Firmware.

Ein als Breitband-Kommunikationssystem verwendetes Hybrid Fiber Coax Netzwerk mit mehreren Netzelementen und Benutzern wird durch die Patenschrift US 5 854 703 offenbart. In dem Dokument werden die Kommunikation und Vermittlung der Kommunikationssignale beschrieben, die durch einen Element-Kontroll-Manager gesteuert werden.

Der Erfindung liegt die Aufgabe zugrunde, eine einheitliche Software-Schnittstelle für Transponder zu realisieren.

Die Aufgabe wird durch einen Transponder der eingangs genannten Art dadurch gelöst, dass eine Firmware des Transponders,
- aus mehreren übereinander liegenden Schichten besteht, die mehrere als Funktionsmodule bezeichnete Softwarekomponenten enthalten,
- wobei eine untere Schicht die Funktionsmodule beinhaltet, welche die Funktionalität der Hardwarekomponenten des Transponders beschreiben,
- und die Funktionsmodule, der über der unteren Schicht liegenden Schicht, gemeinsam eine Anwendungsschnittstelle bilden, welche eine Anwendungssoftware verschiedenster, von Hersteller abhängiger, zentraler Überwachungssysteme verarbeiten kann.

Zur Überwachung und Verwaltung von Netzelementen in einem Netzwerk, wie z.B. Hybrid Fiber Coax (HFC)-Netz, wird in jedes Netzelement ein sogenannter Transponder integriert. Dieser kommuniziert über einen vom HFC-Netz zur Verfügung gestellten bidirektionalen Hochfrequenzkanal mit einem zentralen Überwachungssystem, um Messwerte zu übermitteln oder kritische Situationen zu detektieren und diagnostizieren. Zur Herstellung eines Transponders mit einer Anwendungsschnittstelle, welche die Realisierung von verschiedenen Protokollen und Verwaltungsanwendungen für Überwachungssysteme verschiedener Hersteller erlaubt, wird die Firmware des Transponders in Schichten unterteilt. Die unterste Schicht der Firmware setzt auf der Hardware des Transponders auf. Sie beinhaltet als Funktionsmodule bezeichnete Softwarekomponenten, welche die Funktionalität der Hardwarekomponenten beschreiben und einen definierten Softwarezugriff auf diese bieten. Alle Funktionsmodule der darüber liegenden Schicht gemeinsam bilden eine Anwendungsschnittstelle, die zur Realisierung von spezifischen Anwendungen verschiedener Hersteller verwendet wird. Diese Funktionsmodule können sowohl innerhalb ihrer Schicht auf andere Funktionsmodule sowie auf Funktionsmodule der darunter liegenden Schicht zugreifen. Auf die Anwendungsschnittstelle setzt eine aus Anwendungsprogrammen bestehende Schicht auf.

Die Anwendungsprogramme für die verschiedenen herstellerabhängigen Überwachungssysteme werden unter Verwendung der Funktionen der Anwendungsschnittstelle realisiert. Demzufolge können unterschiedliche Protokolle und Verwaltungsanwendungen bei der Kommunikation des Transponders verwendet werden und die Überwachung und Verwaltung kann den einzelnen Netzelementen individuell angepasst werden.

Die Funktionsmodule können gezielt entsprechend ihrer Funktionalität ersetzt werden. Auf diese Weise können neue Software Versionen durch den Austausch der entsprechenden Teile der Firmware in den Transponder integriert werden.

Der Zugriff auf die Funktionsmodule der Schichten wird in zwei Zugriffsebenen unterschieden. Eine Ebene erlaubt dem Anbieter des zentralen Überwachungssystems den Zugriff auf die über der Anwendungsschicht liegenden Anwendungsprogramme und die zweite Ebene erlaubt dem Hersteller des Transponders den Zugriff auf die zwei unter der Anwendungsschicht liegenden Schichten. Durch die Zweiteilung des Zugriffes kann sichergestellt werden, dass nur der Hersteller des Transponder die unter der Anwendungsschnittstelle liegenden Schichten verändern kann.

Durch den Aufbau der Software in Form von Schichten bleibt dem Anbieter bzw. Anwendungsentwickler des HFC-Netzes der interne Aufbau des Transponders verborgen, da der Anbieter bzw. Anwendungsentwickler lediglich den Zugriff auf die Anwendungsschnittstelle hat.

Eine weitere Möglichkeit den Transponder technisch anzupassen besteht darin, die zugrundeliegende Hardware auszutauschen. Dabei können die Funktionsmodule der untersten Schicht ausgetauscht werden, während die Funktionsmodule der darüber liegenden Schicht und die Anwendungsprogramme unverändert weiterverwendet werden können.

Ein Ausführungsbeispiel der Erfindung wird nachstehend anhand der Figuren näher erläutert. Es zeigt:
- Fig. 1: eine Verzweigung eines HFC-Netzes,
- Fig. 2: Darstellung der Schichten-Firmware,
- Fig. 3: Darstellung der Hardwarekomponenten und der zugehörigen Softwarekomponenten der unteren Schicht,
- Fig. 4: Aufbau des Kommunikationssystems,
- Fig. 5: Aufbau des Ein-/und Ausgabe Systems,
- Fig. 6: Aufbau des Steuerungssystems und
- Fig. 7: Aufbau des Speichersystems.

Ein Hybrid Fiber Coax-Netz kann nicht nur als Kabelfernsehnetz dienen, sondern auch zur Übertragung von interaktiven Diensten wie Internetzugang, Telephonie und Videoabrufdienst (Video-on-demand). Diese Dienste erfordern einen hohen Grad an Zuverlässigkeit, deshalb ist ein zentrales Überwachungssystem des Netzes und seiner Netzelemente notwendig.

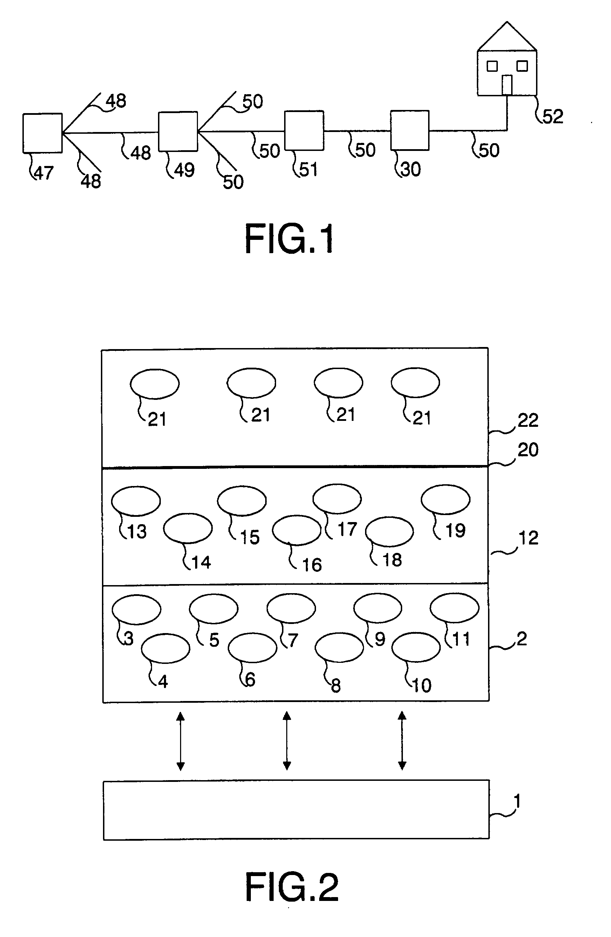

In Fig. 1 ist ein Zweig eines Hybrid Fiber Coax (HFC)-Netzes dargestellt, das bis zu ca. 10000 verschiedene Netzelemente miteinander verbinden kann. Netzelemente eines HFC-Netzes können Hochfrequenzverstärker, Sende-/Empfangsstelle, optische Verzweigungsknoten, Adapter (line extender), Stromversorgungsgeräte sein. Zur Überwachung und Verwaltung der Netzelemente wird in jedes Netzelement ein Transponder integriert, der zusammen mit dem entfernt liegenden zentralen Überwachungssystem für die Funktionalität und Zuverlässigkeit des Netz sorgt. Die in diesem Beispiel dargestellte Verzweigung des Netzes besteht aus einer Sende-/und Empfangsstelle 47, die über ein Hybrid Fiber Coax-Kabel 48 mit weiteren Netzelementen verbunden ist. Das folgende Netzelement der Verzweigung kann ein optischer Verzweigungspunkt 49 sein, dessen Kupferkabelverbindungen 50 über einen Verstärker 51 und eine Steckverbindung 30 zum Endbenutzer 52 führen.

Anhand der weiteren Fig. wird der Transponder mit seiner Hard- und Software beschrieben. In der Fig. 2 wird die Struktur der Firmware des Transponders dargestellt. Folgende Schichten wurden für die Funktionalität der Transponder-Software entwickelt.

Auf einer aus mehreren Komponenten bestehenden Hardware 1 setzt eine untere Schicht 2 auf. Durch die untere Schicht 2 werden die Komponenten der Hardware 1 gesteuert. Die untere Schicht 2 besteht aus mehreren Softwarekomponenten, welche unterschiedliche Aufgaben dieser Schicht erfüllen.

In diesem Ausführungsbeispiel enthält die untere Schicht 2 eine als RF-Schnittstelle 3 bezeichnete Softwarekomponente, eine als Messdaten-Schnittstelle 4 bezeichnete Softwarekomponente, eine als Steuerung 5 bezeichnete Softwarekomponente, eine als Zeitgeber 6 bezeichnete Softwarekomponente, eine als Speicherschnittstelle 7 bezeichnete Softwarekomponente, eine als Datenpuffer 8 bezeichnete Softwarekomponente, eine als Schnittstelle 9 für lokalen Zugriff bezeichnete Softwarekomponente, eine als Steckverbindungskontrollmodul 10 bezeichnete Softwarekomponente und eine als Erweiterungseinheit 11 bezeichnete Softwarekomponente.
Eine über der unteren Schicht 2 liegende Mittelschicht 12 bietet eine Anwendungsschnittstelle 20 für verschiedene Anwendungsprogramme 21.

In der Mittelschicht 12 sorgt ein Überwachungsmodul 13 für die Erfassung bestimmter Messdaten und ein Konfigurationsmodul 14 sorgt für die erforderlichen Verknüpfungen zwischen den Soft- und Hardwarekomponenten. Ein Softwarekonfigurations- und Transfermodul 15 ist für die aktuelle Version und Austausch der Software zuständig. Die Überprüfung des Transponders übernimmt ein innerhalb der Mittelschicht 12 befindliches Testmodul 16. Für die externe Kommunikation zwischen dem Transponder und einem Überwachungssystem des Netzes ist ein Kommunikationsmodul 17 notwendig. Die lokale Kommunikation des Transponders mit Netzwerkelementen findet über einen zweites Kommunikationsmodul 18 statt. Durch eine Schnittstelle 19 zum Steckverbindungskontrollmodul 10 kann ein weit entferntes, zentrales Überwachungssystem die Steckverbindung 30 zum Endbenutzer 52 konfigurieren und steuern.

Eine oberste Schicht 22 enthält die verschiedenen, herstellerspezifischen Anwendungsprogramme 21.

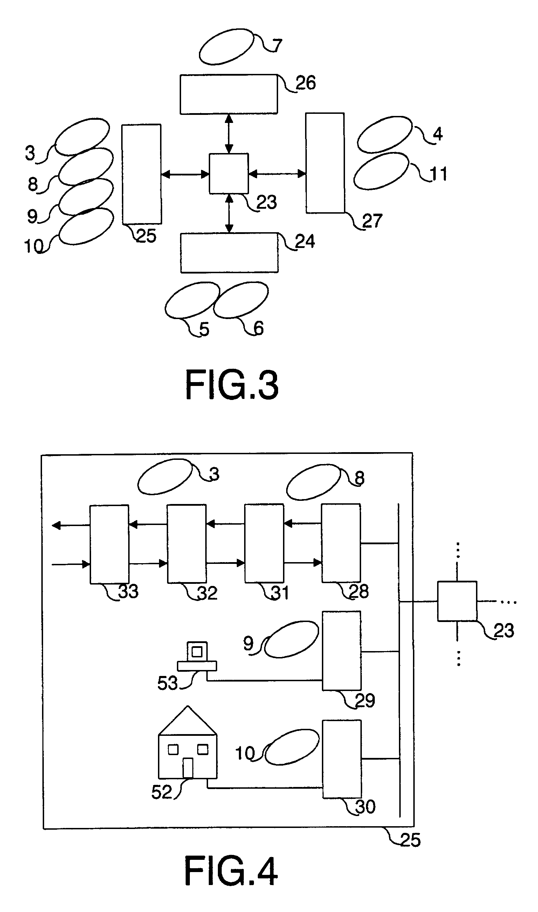

In Fig. 3 bis 7 werden die Bezüge zwischen den Softwarekomponenten und den Komponenten der Hardware 1 dargestellt.

Fig. 3 gibt einen generellen Überblick über die Zuordnung der Transponder Hardware 1 zu den zuständigen Softwarekomponenten der unteren Schicht 2.

Ein Steuerungssystem 24, ein Kommunikationssystem 25, ein Speichersystem 26 und ein Ein-/und Ausgabe System 27 bilden als Teilsysteme mit einem Mikroprozessor 23 die Hardware 1 des Transponders. Die als Teilsysteme 24 bis 27 bezeichneten Hardwarekomponenten sind an den Mikroprozessor 23 gekoppelt und können auf diesen zugreifen. Dem Steuerungssystem 24 sind die Softwarekomponenten Steuerung 5 und Zeitgeber 6 zugeordnet. Die Hardwarekomponenten des Kommunikationssystems 25 werden softwaremäßig durch die RF-Schnittstelle 3, den Datenpuffer 8, die Schnittstelle 9 für lokalen Zugriff und den Steckverbindungskontrollmodul 10 repräsentiert. Das Speichersystem 26 wird durch die Softwarekomponente Speicherschnittstelle 7 angesprochen und für das Ein/und Ausgabe System 27 sind die Softwarekomponenten Messdaten-Schnittstelle 4 und die Erweiterungseinheit 11 zuständig.

Anhand der Fig. 4 wird das Kommunikationssystem 25 mit den zugehörigen Softwarekomponenten näher erläutert. Das mit dem Mikroprozessor 23 verbundene Teilsystem besteht aus einem Nachrichtenspeicher 28, einer seriellen Schnittstelle 29 für lokale Servicearbeiten eines Netzwerkadministrators 53 und einer Steckverbindung 30 zum Endbenutzer 52. Das Steckverbindungskontrollmodul 10 repräsentiert softwaremäßig die Steckverbindung 30, die als Schnittstelle zum End-Benutzer 52 dient. Der Nachrichtenspeicher 28 ist mit einer Hardwarekomponente Modem 31 verbunden und diese wiederum mit einem Analog-/Digital und Digital-/Analog Wandler 32. Die abschließende Hardwarekomponente des Teilsystems ist eine Sende-/und Empfangseinheit 33, die an den Wandler 32 gekoppelt ist.

Die Sende-/und Empfangseinheit 33 für hochfrequente Signale leitet ein empfangenes Signal an den Wandler 32. Diese Hardwarekomponenten werden in ihrer Funktion der Signalverarbeitung durch die RF-Schnittstelle 3 softwaremäßig unterstützt. Der Wandler 32 leitet das Signal weiter an ein Modem 31, welches das Signal in der Hardwarekomponente Nachrichtenspeicher 28 zwischenspeichert. Durch die Softwarekomponente Datenpuffer 8 kann auf den Nachrichtenspeicher 28 und das Modem 31 zugegriffen werden. Falls ein Signal gesendet werden soll, erhält der Nachrichtenspeicher 28 entsprechende Befehle vom Mikroprozessor 23 und die zuvor beschriebenen Arbeitsabläufe der Hard-/- und Softwarekomponenten finden in der umgekehrten Reihenfolge statt.

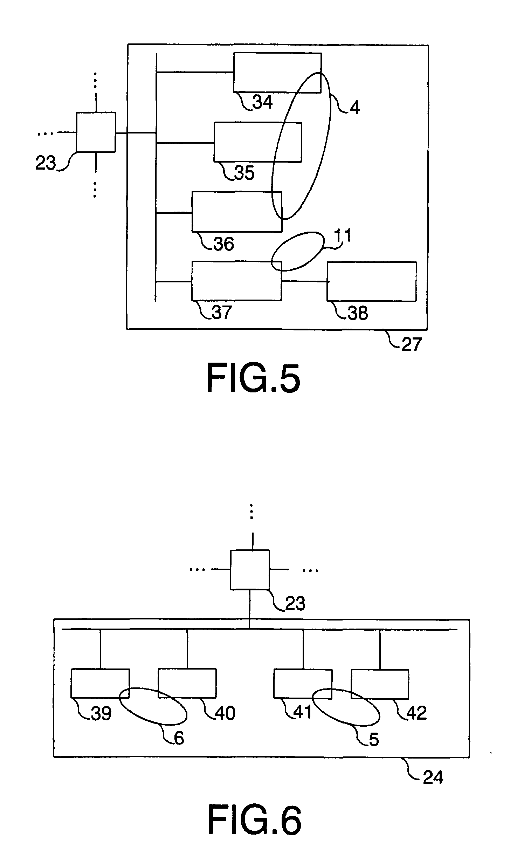

In Fig. 5 sind die Hardwarekomponenten des Ein-/und Ausgabe Systems 27 dargestellt. Es beinhaltet eine Schnittstelle 34 für analoge Geräte, einen Temperatursensor 35 und eine digitale Schnittstelle 36, deren Funktionalitäten durch die Softwarekomponente Messdaten-Schnittstelle 4 beschrieben wird. Das Ein-/und Ausgabe System 27 wird durch eine Erweiterung 38, die durch eine Erweiterungsschnittstelle 37 an den Mikroprozessor 23 gekoppelt ist, ergänzt. Die Erweiterungsschnittstelle 37 ist mit der Softwarekomponente Erweiterungseinheit 11 für die Konfiguration (z.B. Bitrate eines seriellen Erweiterungsbusses, Eingangs-Ausgangsdaten) verantwortlich.
Falls der Temperatursensor 35 eine über dem Temperaturlimit liegende Temperatur misst, wird der Temperaturwert durch die Messdaten-Schnittstelle 4 erfasst und an den Mikroprozessor 23 zur weiteren Verarbeitung gesendet.

Die Fig. 6 gibt den Aufbau des Steuerungssystems 24 wieder. An den Mikroprozessor 23 sind als Hardwarekomponenten des Steuerungssystems 24 eine Zeiteinheit 39 und eine Überwachungseinheit 40 gekoppelt. Beide Hardwarekomponenten werden durch die Softwarekomponente Zeitgeber 6 repräsentiert. Weitere Hardwarekomponenten dieses Teilssystems sind eine Versorgungssteuerung 41 und eine Unterbrechungssteuerung 42, die gemeinsam durch die Softwarekomponente Steuerung 5 softwaremäßig vertreten werden.

Die Überwachungseinheit 40 (Watchdog) wartet in durch die Zeiteinheit 39 bestimmten Zeitintervallen auf ein vom Mikroprozessor 23 gesendetes Kontrollsignal. Falls die Überwachungseinheit im Falle einer Störung dieses nicht mehr empfängt, dann würde sie einen Neustart des Transponders veranlassen. Die für diese Funktion notwendigen Parameter und Kontrollfunktionen werden durch die Softwarekomponente Zeitgeber 6 eingestellt. Falls eine Unterbrechung in der Spannungsversorgung oder im Betrieb auftritt, wird diese durch die Hardwarekomponenten Versorgungssteuerung 41, Unterbrechungssteuerung 42 und die Softwarekomponente Steuerung 5 behandelt. Eine mögliche Maßnahme der Steuerung 5 kann das Einschalten eines Sparmodus sein.

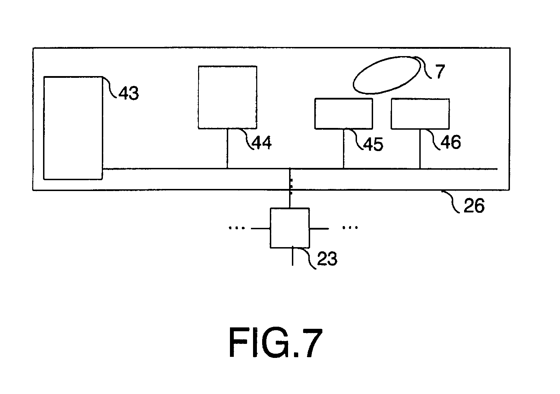

Das in Fig. 7 dargestellte Speichersystem 26 besteht aus einem unveränderlichen Speicher 43, in dem unveränderliche Parameter und in Bibliotheken angeordnete Funktionsmodule der unteren Schicht 2, der Mittelschicht 12 und Anwendungsprogramme der obersten Schicht 22 gespeichert werden. Ein nicht flüchtiger Speicher 44 beinhaltet Anwendungsprogramme sowie neu geladene Softwarekomponenten der Firmware. Der Mikroprozessor 23 bedient sich nicht nur der Speicher 43 bis 44 sondern auch eines flüchtigen, als Arbeitsspeicher 45 definierten, Speichers. Das Speichersystem kann durch die Softwarekomponente Speicherschnittstelle 7 softwaremäßig angesprochen und durch eine Speichererweiterungsschnittstelle 46 um zusätzliche Speicherkapazität ergänzt werden.

In dem nicht flüchtigen Speicher 44 werden neu geladene Anwendungsprogramme 21 und Softwarekomponenten abgespeichert. Für die Softwarekomponenten der Schicht 12 und 2 zeigen tabellarische Verweise auf die jeweils aktuelle Softwarekomponente. Wurde die Softwarekomponente noch nie ausgetauscht, befindet sie sich im unveränderlichen Speicher 43 ansonsten im nicht flüchtigen Speicher 44.

Eine Hauptaufgabe der Speicherschnittstelle 7 ist die Verwaltung der Verweise und Variablen der Programme.

Soll ein Messwert eines Transponders ermittelt werden, wird dies im Anwendungsprogramm 21 durch den Aufruf der entsprechenden Funktion z.B. des Überwachungsmoduls 13, die über die Anwendungsschnittstelle 20 zur Verfügung gestellt wird, angestoßen. Anhand der Adresstabelle des nicht flüchtigen Speichers 44 kann festgestellt werden, wo sich die aktuelle Softwarekomponente des Überwachungsmoduls 13 befindet und die entsprechende Operation dieser Softwarekomponente kann ausgeführt werden. Dazu wird die Messdaten-Schnittstelle 4 der unteren Schicht 2 verwendet. Auch hierfür wird über die entsprechende Tabelle des nicht flüchtigen Speichers 44 die aktuelle Softwarekomponente ermittelt und das Auslesen des Messwertes veranlasst.

## Patentansprüche

1. Transponder mit einer Firmware,
- die aus mehreren übereinander liegenden Schichten (2, 12, 22) besteht, die mehrere als Funktionsmodule ( 3 bis 11, 13 bis 19) bezeichnete Softwarekomponenten enthalten,
- wobei eine untere Schicht (2) die Funktionsmodule (3 bis 11) beinhaltet, welche die Funktionalität der Hardwarekomponenten des Transponders beschreiben,
- und die Funktionsmodule (13 bis 19), der über der unteren Schicht (2) liegenden Schicht (12), gemeinsam eine Anwendungsschnittstelle bilden, welche eine Anwendungssoftware verschiedenster, von Hersteller abhängige, zentraler Überwachungssysteme verarbeiten kann.

2. Transponder nach Anspruch 1
**dadurch gekennzeichnet,**
**dass** ein zum Transponder zugehöriges Netzelement, ein Netzelement eines Hybrid Fiber Coax (HFC)-Netzes ist.

3. Transponder nach Anspruch 1
**dadurch gekennzeichnet,**
**dass** die Funktionsmodule (13 bis 19) der über der unteren Schicht (2) liegenden Schicht (12) zum Zugriff auf andere Funktionsmodule (3 bis 11, 13 bis 19) der eigenen und der unteren Schicht (2) vorgesehen sind.

4. Transponder nach Anspruch 3
**dadurch gekennzeichnet,**
**dass** die oberste Schicht (22) zum Zugriff eines Anbieters des zentralen Überwachungssystems und zum Herunterladen von neuen Anwendungsprogrammen durch den Anbieter des zentralen Überwachungssystems vorgesehen ist, und
**dass** die untere Schicht (2) und die über der unteren Schicht (2) liegende Schicht (12) zum Zugriff des Transponderherstellers und zum Herunterladen von Funktionsmodulen (3 bis 11, 13 bis 19) durch den Transponderhersteller vorgesehen sind.

5. Transponder nach Anspruch 4
**dadurch gekennzeichnet,**
**dass** eine dem Transponder zugrundeliegende Hardware (1) zum Austausch vorgesehen ist während die über der unteren Schicht (2) liegende Schicht (12) und die oberste Schicht (22) unverändert erhalten werden können.
